# EUROPÄISCHE PATENTSCHRIFT

(11) **EP 0 728 658 B1**
(45) Veröffentlichungstag und Bekanntmachung des Hinweises auf die Patenterteilung: **29.07.1998**
(21) Anmeldenummer: 96101943.7
(22) Anmeldetag: 10.02.1996
(51) Int. Cl.: B62D 65/00, B62D 17/00, B60G 7/02

(54) **Hinterachse für ein Kraftfahrzeug**
Rear axle for a motor vehicle
Train arrière pour un véhicule automobile

(30) Priorität: 24.02.1995 DE 19506413
(43) Veröffentlichungstag der Anmeldung: 28.08.1996
(73) Patentinhaber: ADAM OPEL AG, 65423 Rüsselsheim (DE)
(72) Erfinder: Kaltwasser, Helmut, Dipl.-Ing., D-65399 (DE)
(74) Vertreter: Kümpfel, Heinz, Dipl.-Ing.

(56) Entgegenhaltungen:
- DE-A- 3 703 868
- GB-A- 2 193 693
- US-A- 3 811 654
- ATZ AUTOMOBILTECHNISCHE ZEITSCHRIFT, Bd. 93, Nr. 5, 1.Mai 1991, Seiten 274-277, 280, XP000243772 KOSAK W ET AL: "DIE NEUE ZENTRAL-LENKER-HINTERACHSE DER BMW 3ER-BAUREIHE"
- PATENT ABSTRACTS OF JAPAN vol. 012, no. 157 (M-696), 13.Mai 1988 & JP-A-62 275810 (TOYOTA MOTOR CORP), 30.November 1987,
- PATENT ABSTRACTS OF JAPAN vol. 014, no. 355 (M-1004), 31.Juli 1990 & JP-A-02 124386 (MAZDA MOTOR CORP), 11.Mai 1990,
- PATENT ABSTRACTS OF JAPAN vol. 016, no. 041 (M-1206), 31.Januar 1992 & JP-A-03 281407 (MAZDA MOTOR CORP), 12.Dezember 1991,
- PATENT ABSTRACTS OF JAPAN vol. 006, no. 045 (M-118), 20.März 1982 & JP-A-56 160207 (NISSAN MOTOR CO LTD), 9.Dezember 1981,
- PATENT ABSTRACTS OF JAPAN vol. 012, no. 126 (M-687), 19.April 1988 & JP-A-62 251218 (NISSAN MOTOR CO LTD), 2.November 1987,

## Beschreibung

Die Erfindung betrifft eine Hinterachse für ein Kraftfahrzeug, bei der jedes der beiden Räder an einem Radträger gelagert ist, jeder Radträger einen etwa in Fahrzeuglängsrichtung gerichteten und mittels eines Gelenkes mit einem Aufbau des Kraftfahrzeuges verbindbaren Längslenker und mindestens einen etwa quer zur Fahrzeuglängsrichtung gerichteten Querlenker aufweist, die Querlenker jeweils einerseits am Radträger und andererseits an einem mit dem Aufbau verbindbaren Hilfsrahmen schwenkbar angelenkt sind, wobei an der Hinterachse zur Montage an den Aufbau Positioniereinrichtungen vorgesehen sind.

Bei derartigen Hinterachsen besteht bei der Montage an den Aufbau das Problem, daß die Einstellung der Radgeometrie, insbesondere der Vorspurwinkel der Hinterräder, unter erschwerten Bedingungen, wie beispielsweise Überkopfarbeit, unklare Sichtverhältnisse oder schlechte Zugänglichkeit, vorgenommen werden muß. Dabei müssen beispielsweise die Vorspurwinkel der Hinterräder bei der Verbindung der aufbauseitigen Enden der Längslenker mit dem Aufbau gemessen und eingestellt werden.

Bei dieser Montageweise ist eine Automatisierung des Montageprozesses mit einem beträchtlichem Aufwand verbunden, da es sehr schwierig ist, alle auftretenden Herstellungs- und Montagetoleranzen sowie Elastizitäten an der Hinterachse zu berücksichtigen.

Der vorliegenden Erfindung liegt die Aufgabe zugrunde, eine gattungsgemäße Hinterachse derart zu gestalten, daß bei vereinfachter Montage an den Aufbau die Einstellung der Radgeometrie außerhalb des Fahrzeuges vorgenommen werden kann.

Diese Aufgabe wird erfindungsgemäß dadurch gelöst, daß die Positioniereinrichtungen am Hilfsrahmen und an den Längslenkern vorgesehen sind und daß mindestens eine Positioniereinrichtung am jeweiligen Längslenker zur Einstellung der Radgeometrie auf einem Montagestand außerhalb des Kraftfahrzeuges verstellbar ausgebildet ist.

Durch die verstellbare Ausbildung der Positioniereinrichtung kann die Einstellung der Radgeometrie, insbesondere des Vorspurwinkels des Rades, außerhalb des Fahrzeuges auf einem dafür eingerichteten Montagestand manuell oder automatisch vorgenommen werden. Bei der endgültigen Montage an den Aufbau muß dann die Hinterachse nur noch gegen den Aufbau angehoben und mit diesem verbunden werden. Da die Radgeometrie bereits auf dem Montagestand voreingestellt ist, muß bei der Montage an den Aufbau nur für eine exakte Positionierung der Hinterachse am Aufbau gesorgt werden.

Erfindungsgemäß ist vorgesehen, daß die verstellbare Positioniereinrichtung zumindest ein in verschiedenen Positionen am aufbauseitigen Ende des Längslenkers befestigbares Einstellteil aufweist. Durch Verstellung dieses Einstellteils gegenüber dem Längslenker auf dem Montagestand wird die vorgegebene Radgeometrie präzise voreingestellt. Diese Einstellung braucht nach der Endmontage der Hinterachse an den Aufbau durch exakte Positionierung der Hinterachse auf einer gegen den Aufbau verfahrbaren Montagevorrichtung nicht mehr verändert werden.

In einer bevorzugten Ausführungsform ist das Einstellteil als eine Lasche mit einer Positionierbohrung ausgebildet und an einem das aufbauseitige Gelenk des Längslenkers aufnehmenden Gehäuse verstellbar angeordnet. Zur Verstellung der Lasche ist am dem Gehäuse zugewandten Ende der Lasche ein Langloch vorgesehen, das zur Verbindung mit dem Gehäuse eine Befestigungsschraube durchsetzt, die in eine beispielsweise mit dem Gehäuse verbundene Mutter eingedreht werden kann. Die Verstellrichtung der Lasche kann in Abhängigkeit von der Achskinematik und den einzustellenden Radwinkeln räumlich in verschiedenen Richtungen erfolgen.

Zur Einstellung insbesondere des Vorspurwinkels des Rades ist gemäß der Erfindung vorgesehen, daß die Lasche in etwa quer zur Fahrzeuglängsrichtung verstellbar angeordnet ist.

Zur Verstellung der Lasche ist an der Lasche weiterhin eine dem Langloch gleichgerichtete Umbiegung vorgesehen, die mit einer Verprägung am Gehäuse gleitend zur Anlage kommt. Der Verstellweg der Lasche wird dabei durch das Langloch und die Verstellrichtung durch die Umbiegung und die Verprägung bestimmt.

Bei der Aufnahme der Hinterachse auf dem Montagestand wirkt die Positionierbohrung mit einem als Positioniereinrichtung ausgebildeten Zentrierdorn zusammen, der die Lasche auf dem Montagestand fixiert. Die Einstellung des Vorspurwinkels erfolgt dabei durch eine Verstellung des Gehäuses gegenüber der auf dem Montagestand fixierten Lasche. Das Gehäuse und somit auch das aufbauseitige Ende des Längslenkers werden solange gegenüber der Lasche verstellt, bis der gewünschte Vorspurwinkel eingestellt ist. Danach kann zum Fixieren des eingestellten Vorspurwinkels die Lasche fest mit dem Gehäuse verschraubt werden.

Zur Montage der Hinterachse an den Aufbau sind am Gehäuse, in dem das elastische Gelenk am aufbauseitigen Ende des Längslenkers aufgenommen ist, mehrere Langlöcher vorgesehen, welche in Verstellrichtung der Lasche ausgerichtet sind. Durch diese Langlöcher werden auch alle Herstellungs- und Montagetoleranzen ausgeglichen.

Die Positioniereinrichtungen am Montagestand können zur Aufnahme des Hilfsrahmens auch als Zentrierdorne ausgebildet sein, wenn die Positioniereinrichtungen am Hilfsrahmen als Positionierbohrungen ausgebildet werden.

Ein besonderer Vorteil der Erfindung besteht darin, daß die auf dem Montagestand voreinstellbare Radgeometrie, insbesondere der Vorspurwinkel des jeweiligen Rades, unter einer simulierten Betriebsbelastung der Hinterachse meßbar und durch eine Einstellvorrichtung auf einen vorgegebenen Wert einstellbar ist. Dazu sind die jeweiligen Längslenker auf dem Montagestand um eine etwa im Bereich der Felgenzentrierung am Radlager angeordnete Hochachse schwenkbar aufgenommen. Die entsprechenden Feder/Dämpferlasten, die etwa einer mittleren Belastung durch zwei Personen im Kraftfahrzeug entsprechen, werden dabei an den Radträgern im Bereich der Befestigung der Stoßdämpfer bzw. der Feder eingeleitet. Auf diese Weise werden schon bei der Einstellung der Radgeometrie auf dem Montagestand alle Elastizitäten an den Gelenken berücksichtigt.

Zur Messung der Radgeometrie auf dem Montagestand sind im Bereich der Felgenzentrierung Meßeinrichtungen vorgesehen, welche die Bremsscheibe oder -trommel kontinuierlich abtasten. Um genauere Sturz- bzw. Vorspurwerte zu bekommen, können die Meßtaster der Meßeinrichtung durch die an der Bremsscheibe oder -trommel vorhandenen Öffnungen hindurch direkt gegen einen Radlagerflansch ausgerichtet sein.

Die Einstellung der Radgeometrie auf dem Montagestand kann besonders einfach erfolgen, wenn die Einstellvorrichtung als ein Einstellhebel ausgebildet ist, welcher am Zentrierdorn zur Aufnahme der Lasche drehbar gelagert ist und mit einem Stift derart in eine Bohrung am Gehäuse greift, daß durch die Drehung des Einstellhebels um den Zentrierdorn eine relative Verschiebung des Gehäuses gegenüber der Lasche und somit auch eine Schwenkung des Längslenkers um die Hochachse stattfindet. Nachdem beispielsweise der vorgegebene Vorspurwinkel durch Drehung des Einstellhebels eingestellt ist, wird die Lasche mittels der Befestigungsschraube fest mit dem Gehäuse verbunden.

Zur Endmontage an den Aufbau wird die erfindungsgemäße Hinterachse auf einer gegen den Aufbau verfahrbaren Montagevorrichtung, insbesondere einen Montagebock, aufgenommen und mittels der Zentrierdorne, deren Lage exakt der Lage der Zentrierdorne am Montagestand entspricht, positioniert. Die Positionierung des Montagebocks gegenüber dem Aufbau kann, wie an sich bekannt, auch durch Zentrierdorne und Positionierbohrungen erfolgen, so daß auch die auf dem Montagebock hochgefahrene Hinterachse exakt gegenüber dem Aufbau positioniert ist. In dieser Montagestellung kann die Hinterachse dann mittels Schrauben mit dem Aufbau verbunden werden. Da dabei keine Einstellung der Radgeometrie mehr notwendig ist, kann die Befestigung der Hinterachse an den Aufbau relativ einfach automatisiert werden.

Gemäß einer weiteren vorteilhaften Ausbildung der Erfindung können zur Vereinfachung des Montageverfahrens der Montagestand und der Montagebock eine und dieselbe Montagevorrichtung sein. Auf diese Weise braucht die Hinterachse nur einmal auf dieser Montagevorrichtung aufgenommen und positioniert werden, wobei die Einstellung der Radgeometrie kurz vor der Endmontage an den Aufbau außerhalb des Kraftfahrzeuges erfolgen kann.

Die Erfindung läßt zahlreiche Ausführungsformen zu. Zur weiteren Verdeutlichung ihres Grundprinzips ist eine davon in der Zeichnung dargestellt und wird nachfolgend beschrieben. Die Zeichnung zeigt teilweise schematisch in
- Fig. 1: eine Draufsicht auf die erfindungsgemäße Hinterachse;
- Fig. 2: eine vergrößerte Darstellung des aufbauseitigen Endes des Längslenkers nach Fig. 1 mit einer Einstellvorrichtung;
- Fig. 3: einen Schnitt gemäß Linie A-A in Fig. 2;
- Fig. 4: einen Schnitt gemäß Linie B-B in Fig.2.

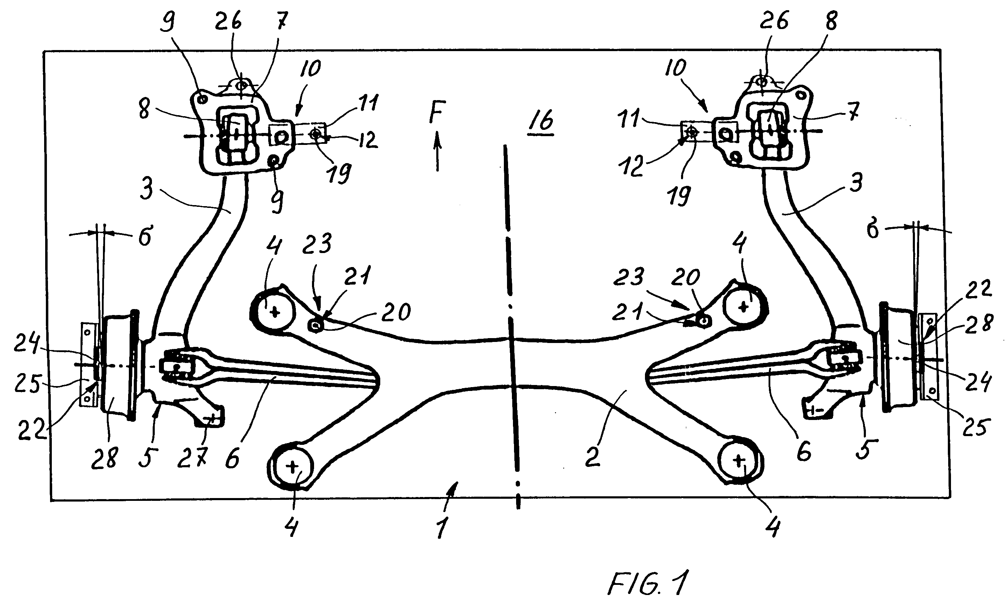

Die in Fig. 1 dargestellte Hinterachse 1 besteht im wesentlichen aus einem Hilfsrahmen 2, der mittels elastischer Lager 4 an einem nicht dargestellten Aufbau befestigbar ist. Am Hilfsrahmen 2 sind zur Führung des jeweiligen Rades (nicht dargestellt) zwei etwa übereinander angeordnete und quer zur Fahrzeuglängsrichtung F gestellte Querlenker 6 schwenkbar angelenkt, die jeweils radseitig gelenkig mit dem Radträger 5 verbunden sind. Die Radträger 5 sind jeweils mit einem etwa in Fahrzeuglängsrichtung F nach vorne gerichteten und mittels eines Gelenkes 8 elastisch am Aufbau angelenkten Längslenker 3 starr verbunden.

Da die Radaufhängungen für das linke und das rechte Rad symmetrisch bzw. spiegelbildlich ausgeführt sind, wird im weiteren nur auf die linke, in Fig. 1 dargestellte Radaufhängung Bezug genommen.

Das Gelenk 8 am aufbauseitigen Ende des Längslenkers 3 ist in einem Gehäuse 7 gelagert, das zur Verbindung mit dem Aufbau mehrere Langlöcher 9 aufweist. Am Gehäuse 7 ist weiterhin eine verstellbare Positioniereinrichtung 10 angeordnet, die im wesentlichen aus einer eine Positionierbohrung 12 aufweisenden und etwa quer zur Fahrzeuglängsrichtung F verstellbaren Lasche 11 besteht. Die Positionierbohrung 12 wirkt bei der Aufnahme auf dem Montagestand 16 mit einem Zentrierdorn 19 zusammen.

Am Hilfsrahmen 2 sind ebenfalls Positionierbohrungen 21 vorgesehen, die bei der Aufnahme auf dem Montagestand 16 mit Zentrierdornen 20 zusammenwirken.

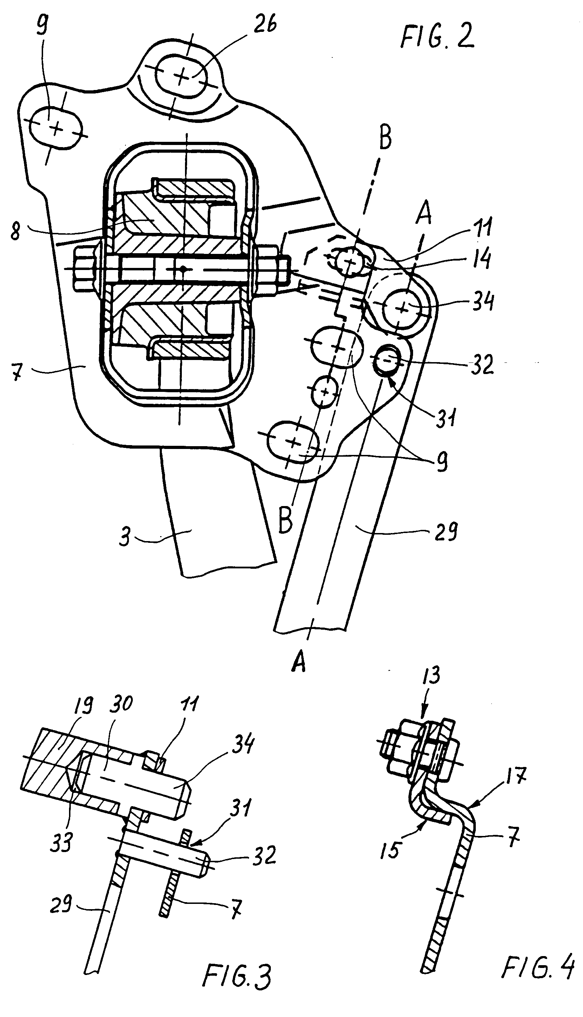

Fig. 2 und Fig. 4 verdeutlichen die verstellbare Anordnung der Lasche 11 am Gehäuse 7. Dazu ist an der Lasche 11 ein Langloch 14 und eine Umbiegung 15 vorgesehen, die bei der Verstellung der Lasche 11 gegenüber dem Gehäuse 7 mit einer Verprägung 17 gleitend zur Anlage kommt. Die Verprägung 17 ist dabei etwa quer zur Fahrzeuglängsrichtung ausgerichtet.

Der Längslenker 3 ist auf dem Montagestand 16 mittels einer nicht dargestellten Vorrichtung um eine etwa im Bereich der Felgenzentrierung 22 angeordnete Hochachse 24 schwenkbar aufgenommen. Dies ermöglicht das aufbauseitige Ende des Längslenkers 3, das auf dem Montagestand mittels eines am Gehäuse 7 angeordneten Langloches 26 verschiebbar gelagert ist, zur Einstellung des Vorspurwinkels δ um die Hochachse 24 zu schwenken. Die Hochachse 24 muß dabei nicht unbedingt im Bereich der Felgenzentrierung 22 angeordnet sein, sie kann auch beispielsweise im Bereich der radseitigen Gelenke der Querlenker 6 positioniert sein.

Vor der Einstellung des Vorspurwinkel δ werden am Punkt 27 des Radträgers 5, nämlich der Befestigungsstelle des Stoßdämpfers bzw. der Feder, Kräfte bzw. Momente eingeleitet, die eine Betriebsbelastung im späteren Fahrbetrieb simulieren. Dadurch werden insbesondere auftretende Elastizitäten am aufbauseitigen Gelenk 8 des Längslenkers berücksichtigt.

Der Vorspurwinkel δ wird während des Einstellvorganges von einer Meßeinrichtung 25 an der Felgenzentrierung 22 gemessen, wobei die Meßtaster der Meßeinrichtung 25 kontinuierlich die Bremstrommel 28 abtasten. Die präzise Einstellung des Vorspurwinkels δ wird dabei mittels eines Einstellhebels 29 vorgenommen, welcher drehbar am Zentrierdorn 19 zur Positionierung der Lasche 11 gelagert ist. Der Einstellhebel 29 ist derart ausgebildet, daß er einerseits mit einem Zapfen 30 drehbar in eine Bohrung 33 am Zentrierdorn 19 und andererseits mit einem Stift 32 in ein Langloch 31 am Gehäuse 7 eingreift. Durch diese Ausbildung kann die Lasche 11 an einem Positionierzapfen 34 des Einstellhebels 29 positioniert werden, welcher koaxial zum Zentrierdorn 19 angeordnet ist. Der Einstellhebel 29 kann somit immer am Montagestand 16 verbleiben.

Durch Drehung des Einstellhebels 29 um den Zentrierdorn 19 kann das Gehäuse 7 relativ zu der auf dem Montagestand 16 am Positionierzapfen 34 fixierten Lasche 11 präzise verstellt werden. Dabei dreht sich auch der Längslenker 3 um die Hochachse 24 und verändert somit den Vorspurwinkel δ des Rades. Beim Erreichen des vorgegebenen Vorspurwinkels wird die Lasche 11 mittels der Schraubverbindung 13 mit dem Gehäuse 7 verbunden. Danach kann die Hinterachse 1 vom Montagestand 16 abgenommen und zur Endmontage an den Aufbau transportiert werden.

## Patentansprüche

1. Hinterachse für ein Kraftfahrzeug, bei der jedes der beiden Räder an einem Radträger (5) gelagert ist, jeder Radträger einen etwa in Fahrzeuglängsrichtung gerichteten und mittels eines Gelenkes (8) mit einem Aufbau des Kraftfahrzeuges verbindbaren Längslenker (3) und mindestens einen etwa quer zur Fahrzeuglängsrichtung gerichteten Querlenker (6) aufweist, die Querlenker jeweils einerseits am Radträger und andererseits an einem mit dem Aufbau verbindbaren Hilfsrahmen (2) schwenkbar angelenkt sind, wobei an der Hinterachse zur Montage an den Aufbau Positioniereinrichtungen (10, 23) vorgesehen sind, **dadurch gekennzeichnet**, daß die Positioniereinrichtungen (10, 23) am Hilfsrahmen (2) und an den Längslenkern (3) vorgesehen sind und daß mindestens eine Positioniereinrichtung (10) am jeweiligen Längslenker (3) zur Einstellung der Radgeometrie auf einem Montagestand (16) außerhalb des Kraftfahrzeuges verstellbar ausgebildet ist.

2. Hinterachse nach Anspruch 1, **dadurch gekennzeichnet**, daß die verstellbare Positioniereinrichtung (10) zumindest ein in verschiedenen Positionen am aufbauseitigen Ende des Längslenkers (3) befestigbares Einstellteil (11) aufweist.

3. Hinterachse nach Anspruch 2, **dadurch gekennzeichnet**, daß das Einstellteil (11) als eine Lasche (11) ausgebildet und an einem das aufbauseitige Gelenk (8) des Längslenkers (3) aufnehmenden Gehäuse (7) verstellbar angeordnet ist, wobei die Lasche (11) zur verstellbaren Befestigung am Gehäuse (7) ein Langloch (14) und zum Positionieren auf dem Montagestand (16) eine Positionierbohrung (12) aufweist.

4. Hinterachse nach Anspruch 3, **dadurch gekennzeichnet**, daß die Lasche (11) zur Einstellung des Vorspurwinkels (δ) des Rades auf dem Montagestand (16) etwa quer zur Fahrzeuglängsrichtung F verstellbar ist.

5. Hinterachse nach Anspruch 3 oder 4, **dadurch gekennzeichnet**, daß die Lasche (11) eine dem Langloch (14) gleichgerichtete Umbiegung (15) aufweist, die mit einer in Verstellrichtung der Lasche (11) gerichteten Verprägung (17) am Gehäuse (7) gleitend zur Anlage kommt.

6. Hinterachse nach einem der Ansprüche 3 bis 5, **dadurch gekennzeichnet**, daß am Gehäuse (7) mehrere Langlöcher (9) zur Verbindung mit dem Aufbau vorgesehen sind, welche in Verstellrichtung der Lasche (11) ausgerichtet sind.

7. Hinterachse nach einem der Ansprüche 1 bis 6, **dadurch gekennzeichnet**, daß die Positioniereinrichtungen (23) am Hilfsrahmen (2) als Positionierbohrungen (21) und die Positioniereinrichtungen am Montagestand (16) als mit den Positionierbohrungen (21) am Hilfsrahmen (2) und mit den Positionierbohrungen (12) an den Laschen (11) zusammenwirkende Zentrierdorne (19, 20) ausgebildet sind.

8. Hinterachse nach einem der Ansprüche 1 bis 7, **dadurch gekennzeichnet**, daß die auf dem Montagestand (16) einstellbare Radgeometrie, insbesondere der Vorspurwinkel (δ) des jeweiligen Rades, unter einer simulierten Betriebsbelastung der Hinterachse (1) meßbar und durch eine Einstellvorrichtung (29) auf einen vorgegebenen Wert einstellbar ist.

9. Hinterachse nach einem der Ansprüche 1 bis 8, **dadurch gekennzeichnet**, daß der Längslenker (3) auf dem Montagestand (16) um eine etwa im Bereich der Felgenzentrierung (22) am Radlager angeordnete Hochachse (24) schwenkbar aufgenommen ist und daß zur Messung der Radgeometrie Meßeinrichtungen (35) im Bereich der Felgenzentrierung (22) vorgesehen sind.

10. Hinterachse nach Anspruch 8 oder 9**, dadurch gekennzeichnet**, daß die Einstellvorrichtung (29) als ein Einstellhebel (29) ausgebildet ist, welcher am Zentrierdorn (19) zur Aufnahme der Lasche (11) drehbar gelagert ist und mit einem Stift (32) derart in eine Bohrung (31) am Gehäuse (7) greift, daß durch die Drehung des Einstellhebels (29) um den Zentrierdorn (19) eine relative Verschiebung des Gehäuses (7) gegenüber der Lasche (11) und somit auch eine Schwenkung des Längslenkers (3) um die Hochachse (24) stattfindet.

11. Hinterachse nach einem der Ansprüche 1 bis 10, **dadurch gekennzeichnet**, daß die Hinterachse (1) zur Endmontage an den Aufbau auf einem gegen den Aufbau verfahrbaren Montagebock aufnehmbar und mittels Zentrierdorne positionierbar ist, wobei die Lage dieser Zentrierdorne der Lage der Zentrierdorne (19, 20) am Montagestand (16) entspricht.

12. Hinterachse nach einem der Ansprüche 1 bis 11, **dadurch gekennzeichnet**, daß der Montagestand (16) und der Montagebock eine und dieselbe Montagevorrichtung sind.

## Claims

1. Rear axle for a motor vehicle, in which each of the two wheels is mounted on a wheel carrier (5), each wheel carrier comprises a longitudinal control arm (3) which is directed approximately in the longitudinal direction of the vehicle and can be connected by means of a joint (8) to a body of the motor vehicle and at least one transverse control arm (6) directed approximately transversely to the longitudinal direction of the vehicle, the transverse control arms are in each case linked pivotably on the one hand to the wheel carrier and on the other hand to an auxiliary frame (2) which can be connected to the body, wherein on the rear axle are provided positioning devices (10, 23) for assembly on the body, characterised in that the positioning devices (10, 23) are provided on the auxiliary frame (2) and on the longitudinal control arms (3) and in that at least one positioning device (10) is formed displaceably on the respective longitudinal control arm (3) for adjustment of the wheel geometry on an assembly stand (16) outside the motor vehicle.

2. Rear axle according to claim 1, characterised in that the displaceable positioning device (10) comprises at least one adjusting portion (11) which can be attached to the body end of the longitudinal control arm (3) in different positions.

3. Rear axle according to claim 2, characterised in that the adjusting portion (11) is constructed as a strap (11) and arranged displaceably on a housing (7) which receives the joint (8) on the body side of the longitudinal control arm (3), wherein the strap (11) comprises an oblong hole (14) for displaceable attachment to the housing (7) and a positioning bore (12) for positioning on the assembly stand (16).

4. Rear axle according to claim 3, characterised in that the strap (11) for adjustment of the toe-in angle (δ) of the wheel on the assembly stand (16) is displaceable approximately transversely to the longitudinal direction F of the vehicle.

5. Rear axle according to claim 3 or 4, characterised in that the strap (11) comprises a portion (15) bent in the same direction as the oblong hole (14), which comes slidingly into abutment with an indentation (17) on the housing (7) directed in the direction of displacement of the strap (11).

6. Rear axle according to any of claims 3 to 5, characterised in that on the housing (7) are provided several oblong holes (9) for connection to the body, which are oriented in the direction of displacement of the strap (11).

7. Rear axle according to any of claims 1 to 6, characterised in that the positioning devices (23) on the auxiliary frame (2) are designed as positioning bores (21) and the positioning devices on the assembly stand (16) are designed as centring mandrels (19, 20) cooperating with the positioning bores (21) on the auxiliary frame (2) and with the positioning bores (12) on the straps (11).

8. Rear axle according to any of claims 1 to 7, characterised in that the wheel geometry which is adjustable on the assembly stand (16), in particular the toe-in angle (δ) of the respective wheel, can be measured under a simulated working load on the rear axle (1) and adjusted by an adjusting device (29) to a predetermined value.

9. Rear axle according to any of claims 1 to 8, characterised in that the longitudinal control arm (3) is held pivotably on the assembly stand (16) about a vertical axis (24) arranged approximately in the region of the rim centring means (22) on the wheel bearing and in that for measurement of the wheel geometry measuring devices (35) are provided in the region of the rim centring means (22).

10. Rear axle according to claim 8 or 9, characterised in that the adjusting device (29) is constructed as an adjusting lever (29) which is mounted rotatably on the centring mandrel (19) for receiving the strap (11) and with a pin (32) engages in a bore (31) on the housing (7) in such a way that by rotation of the adjusting lever (29) about the centring mandrel (19) relative displacement of the housing (7) in relation to the strap (11) and hence also pivoting of the longitudinal control arm (3) about the vertical axis (24) take place.

11. Rear axle according to any of claims 1 to 10, characterised in that the rear axle (1) for final assembly on the body can be held on an assembly block movable towards the body and can be positioned by means of centring mandrels, wherein the position of these centring mandrels corresponds to the position of the centring mandrels (19, 20) on the assembly stand (16).

12. Rear axle according to any of claims 1 to 11, characterised in that the assembly stand (16) and the assembly block are one and the same assembly device.

## Revendications

1. Essieu arrière pour un véhicule automobile, dans lequel chacune des deux roues est montée sur un support de roue (5), chaque support de roue comporte un bras oscillant longitudinal (3) orienté sensiblement dans la direction longitudinale du véhicule et lié à une structure du véhicule par l'intermédiaire d'au moins une articulation (8) ainsi qu'au moins un bras oscillant transversal (6) orienté sensiblement transversalement par rapport à la direction longitudinale du véhicule, les bras oscillants transversaux sont articulés avec possibilité de pivotement d'un côté, au support de roue et de l'autre à un châssis auxiliaire (2) relié à la structure, des dispositifs de positionnement (10, 23) étant prévus sur l'essieu arrière pour son montage sur la structure, caractérisé par le fait que les dispositifs de positionnement (10, 23) sont prévus sur le châssis auxiliaire (2) et sur les bras oscillants longitudinaux (3) et par le fait qu'au moins un dispositif de positionnement (10) sur le bras oscillant longitudinal (3) concerné est agencé pour le réglage de la géométrie des roues sur un banc de montage (16) à l'extérieur du véhicule.

2. Essieu arrière selon la revendication 1, caractérisé par le fait que le dispositif de positionnement (10) réglable comporte au moins une pièce de réglage (11) qui peut être fixée dans différentes positions à l'extrémité côté structure du bras oscillant longitudinal (3).

3. Essieu arrière selon la revendication 2, caractérisé par le fait que la pièce de réglage (11) est réalisée sous la forme d'une patte (11) et est montée avec possibilité de réglage sur un corps (7) qui reçoit l'articulation (8) côté structure du bras oscillant longitudinal (3), la patte (11) comportant, pour la fixation réglable au corps (7), un trou oblong (14) et, pour le positionnement sur le banc de montage (16), un trou de positionnement (12).

4. Essieu arrière selon la revendication 3, caractérisé par le fait que la patte (11), pour le réglage de l'angle de pincement (δ) de la roue sur le banc de montage (16), peut être réglé sensiblement transversalement à la direction longitudinale F du véhicule.

5. Essieu arrière selon la revendication 3 ou 4, caractérisé par le fait que la patte (11) présente une partie coudée (15) qui s'étend dans la même direction que le trou oblong (14) et vient en appui coulissant sur une forme (17) du corps (7) orientée dans la direction de réglage de la patte (11).

6. Essieu arrière selon une des revendications 3 à 5, caractérisé par le fait que plusieurs trous oblongs (9) sont prévus sur le corps (7) pour la liaison à la structure, lesquels trous oblongs sont orientés dans la direction de réglage de la patte (11).

7. Essieu arrière selon une des revendications 1 à 6, caractérisé par le fait que les dispositifs de positionnement (23) sur le châssis auxiliaire (2) sont réalisés sous la forme de trous de positionnement (21) et les dispositifs de positionnement sur le banc de montage (16) sont agencés sous la forme de broches de centrage (19, 20) qui coopèrent avec les trous de positionnement (21) sur le châssis auxiliaire (2) et avec les trous de positionnement (12) dans les pattes (11).

8. Essieu arrière selon une des revendications 1 à 7, caractérisé par le fait que la géométrie des roues réglée sur le banc de montage (16), en particulier l'angle de pincement (δ) de la roue concernée, petit être mesurée sous une charge de fonctionnement simulée de l'essieu arrière (1) et réglée à une valeur prédéterminée à l'aide d'un dispositif, de réglage (29).

9. Essieu arrière selon une des revendications 1 à 8, caractérisé par le fait que le bras oscillant longitudinal (3), sur le banc de montage (16), est monté avec possibilité de pivotement autour d'un axe vertical (24) situé sur la fusée de roue, sensiblement dans la région du centrage de jante (22), et que des dispositifs de mesure (35) sont prévus dans la région du centrage de jante (22) pour mesurer la géométrie de roue.

10. Essieu arrière selon la revendication 8 ou 9, caractérisé par le fait que le dispositif de réglage (29) est réalisée sous la forme d'un levier de réglage (29) qui est monté tournant sur la broche de centrage (19) recevant la patte (11) et s'engage par un doigt (32) dans un trou (31) du corps (7), de telle sorte qu'en faisant tourner le levier de réglage (29) autour de la broche de centrage (19), il se produise un déplacement relatif du corps (7) par rapport à la patte (11) et ainsi un pivotement du bras oscillant longitudinal (3) autour de l'axe vertical (24).

11. Essieu arrière selon une des revendications 1 à 10, caractérisé par le fait que l'essieu arrière (1), pour son montage définitif sur la structure, peut être placé et positionné à l'aide de broches de centrage sur un support de montage déplacable en direction de la structure, la position de ces broches de centrage correspondant à la position des broches de centrage (19, 20) sur le banc de montage (16).

12. Essieu arrière selon une des revendications 1 à 11, caractérisé par le fait que le banc de montage (16) et le support de montage sont un seul et même dispositif de montage.
